# EUROPEAN PATENT SPECIFICATION

(11) **EP 1 124 284 B1**
(45) Date of publication and mention of the grant of the patent: **14.01.2004**
(21) Application number: 00116242.9
(22) Date of filing: 08.08.2000
(51) Int. Cl.: H01R 4/18

(54) **Alternating current generator for vehicle**
Wechselstromgenerator für Fahrzeuge
Générateur de courant alternatif pour véhicule

(30) Priority: 10.02.2000 JP 2000033971
(43) Date of publication of application: 16.08.2001
(73) Proprietor: MITSUBISHI DENKI KABUSHIKI KAISHA, Tokyo 100-8310 (JP)
(72) Inventor: Tanaka, Kazunori, Mitsubishi Denki K.K., Tokyo 100-8310 (JP); Asao, Yoshihito, Mitsubishi Denki K.K., Tokyo 100-8310 (JP)
(74) Representative: HOFFMANN - EITLE

(56) References cited:
- EP-A- 0 054 854
- FR-A- 2 723 483
- US-A- 3 364 460
- US-A- 3 739 323

## Description

### BACKGROUND OF THE INVENTION

This invention relates to an alternating current generator used with the generator mounted in a vehicle and particularly, terminal treatment of a lead conductor of a stator coil.

Typically, a three-phase alternating current generator having a rotor of launder type is used in a generator mounted in a vehicle. In such an alternating current generator, whose configuration is disclosed in, for example, the Unexamined Japanese Patent Application Publication No. Hei 4-168952, a three-phase stator coil is wound and inserted into a stator core in the stator side, and the stator coil has a lead conductor, and a metal terminal is mounted in the end of the lead conductor and is connected and fixed in a commutator of three-phase full wave type provided in a bracket. A copper wire having a high heat-resistant insulating film such as a polyamide-imide electric wire is used as the stator coil and the lead conductor is provided so that this copper wire (single core copper wire) extends from the stator coil. The metal terminal formed of copper group metals is bonded to the lead conductor by soldering, combination of caulking with soldering, or fusing, and is fixed in the commutator by screws.

The alternating current generator for vehicle is mounted in an engine frame within an engine room of a vehicle, and atmospheric temperature is high and applied vibration is also large. In particular, the temperature of the stator coil is increased to about 200°C which is the heat-resistant limit of the high heat-resistant insulating film in addition to the high atmospheric temperature at heavy load, and when the soldering described above is used in bonding between the lead conductor of the stator coil and the metal terminal, heat deterioration develops and the increase in bonding resistance of a bonded portion may result in breaking of wire. Because of this, a high-temperature solder with high Pb (lead) content must be used, but there were problems that the high-temperature solder with high Pb content causes deterioration of working atmosphere and reliability is reduced due to very bad workability.

Also, bonding by the fusing has the disadvantages that a form of the bonded portion is not stable and fatigue fracture due to vibration during use tends to occur since the bonding is fused by applying pressure, and both of strength and electrical conduction became unstable in case that the bonded portion depends on only fixing by the caulking. Further, it was contemplated that the copper wire of the lead conductor is welded to the metal terminal as an alternative to these bonding methods. But in this case, while hardening or crack of the copper wire due to weld temperature occurs, intergranular crack is caused by occurrence of water vapor associated with reduction of oxides included in the metal terminal or the lead conductor and blowholes occur within a molten conductor, with the result that a decrease in resistance to vibration or an increase in electrical resistance of the bonded portion was caused and any cases had a great influence on reliability.

### SUMMARY OF THE INVENTION

The invention is implemented to solve such problems, and it is an object of the invention to obtain an alternating current generator for vehicle with high reliability in which a bonded portion of the.end of a lead conductor of a stator coil. does not deteriorate to temperature or vibration.

An alternating current generator for vehicle according to the invention comprises a stator including a stator core and a polyphase stator coil having a lead conductor wound and inserted into this stator core, a rotor in which rotor cores for forming magnetic poles are fixed in a rotating shaft, a front bracket and a rear bracket for holding the stator and rotatably supporting the rotor, and a commutator which is mounted in this rear bracket and to which a metal terminal bonded to the lead conductor of the stator coil is connected, and it is configured so that bonding between the lead conductor and the metal terminal is fixed by caulking with bonding pieces provided in the metal terminal embracing the end of the lead conductor from both sides and spacing between the bonding pieces embracing from both of these sides is bonded and fixed by arc welding.

Also, it is configured so that fixation by welding of the spacing between the bonding pieces is performed in a part of the longitudinal direction of the spacing between the bonding pieces. Further, it is configured so that fixation by welding of the spacing between the bonding pieces is welded including a part of the lead conductor. Furthermore, it is configured so that a notch as the lead conductor is partially exposed in a state fixed by caulking is provided in the tip side of the lead conductor of the bonding pieces and spacing between the bonding pieces is welded and fixed in the vicinity of this notch.

Also, an applied pressure at the time of caulking is set so that a residual rate of a sectional area of the lead conductor becomes 70 to 80% in the fixation by caulking of the lead conductor by the bonding pieces. Further, it is configured so that oxygen free copper is used in at least one of the lead conductor and the metal terminal. Furthermore, it is configured so that the metal terminal is formed of a material with a hardness higher than that of the lead conductor. Also, it is configured so that solder coating is applied to a bonded portion by welding. Further, it is configured so that the lead conductor swaged and fixed by the bonding pieces of the metal terminal consists of a plurality of lead conductors.

### BRIEF DESCRIPTION OF THE DRAWINGS

Fig. 1 is a perspective view showing a terminal treatment portion of a lead conductor of an alternating current generator for vehicle of a first embodiment according to this invention;
Fig. 2 is a sectional view showing the whole configuration of the alternating current generator for vehicle of the first embodiment according to the invention;
Fig. 3 is a perspective view showing a configuration of a stator of the alternating current generator for vehicle of the first embodiment according to the invention;
Fig. 4. is a graph illustrating strength of terminal treatment of the lead conductor of the alternating current generator for vehicle of the first embodiment according to the invention;
Fig. 5 is a graph illustrating strength of terminal treatment of the lead conductor of the alternating current generator for vehicle of the first embodiment according to the invention;
Fig. 6 is a perspective view showing a terminal treatment portion of a lead conductor of an alternating current generator for vehicle of a second embodiment according to the invention; and
Fig. 7 is a perspective view showing a terminal treatment portion of a lead conductor of an alternating current generator for vehicle of a third embodiment according to the invention.

### DETAILED DESCRIPTION OF THE PREFRRED EMBODIMENTS

### (First Embodiment)

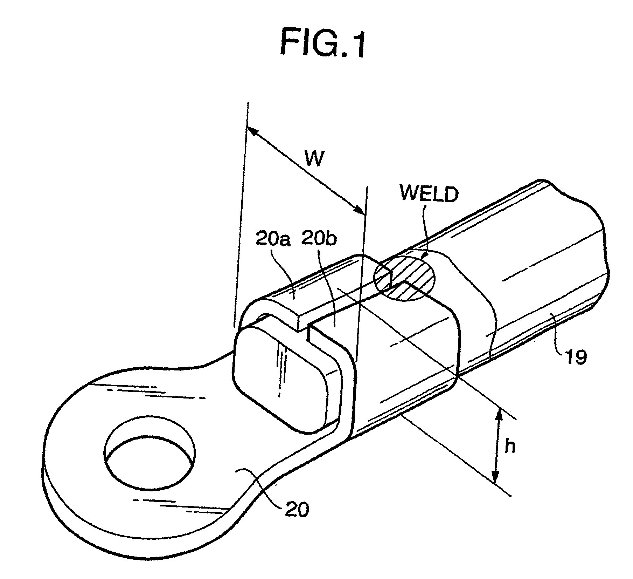

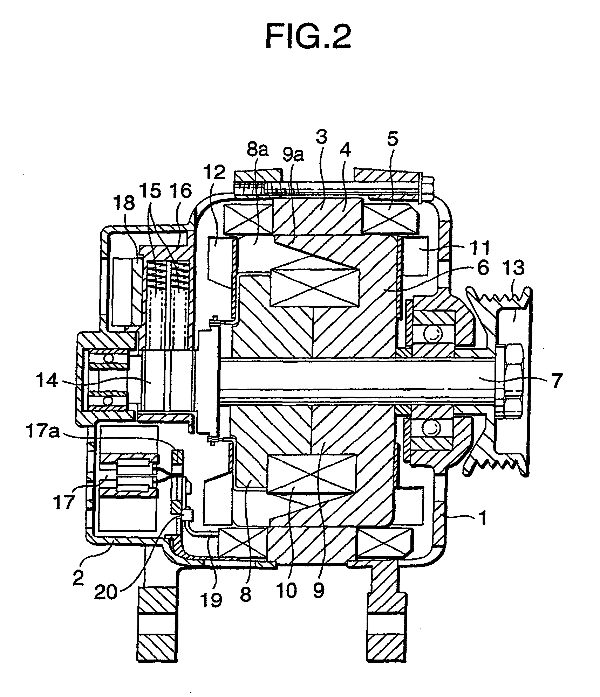

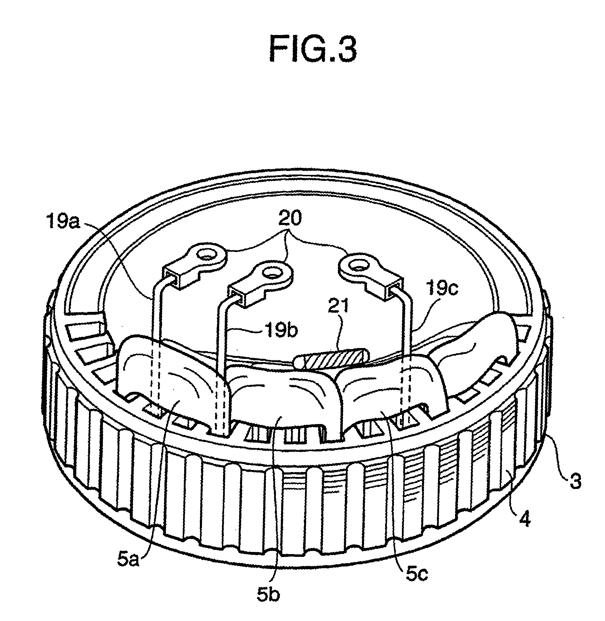

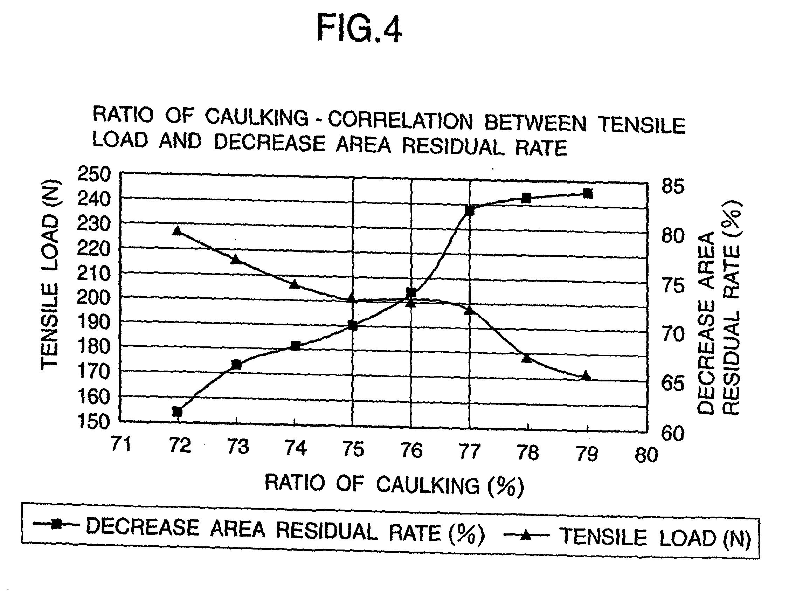

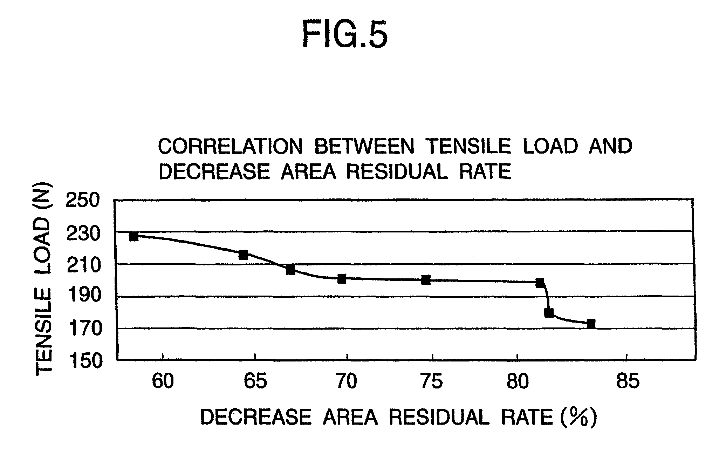

Figs. 1 to 5 illustrate an alternating current generator for vehicle of a first embodiment according to this invention, and Fig. 1 is a perspective view of a terminal treatment portion of a lead conductor of a stator coil, and Fig. 2 is a sectional view showing the whole configuration of the generator, and Fig. 3 is a perspective view showing a configuration of a stator, and Figs. 4 and 5 are graphs illustrating strength of terminal treatment of the lead conductor of the stator coil. In Fig. 2, numeral 1 is a front bracket, and numeral 2 is a rear bracket, and numeral 3 is a stator sandwiched between the front bracket 1 and the rear bracket 2 and the stator comprises a stator core 4 and a stator coil 5. Numeral 6 is a rotor comprising a rotating shaft 7 whose both ends are supported by the front bracket 1 and the rear bracket 2, rotor cores 8 and 9 mounted on this rotating shaft 7, a field coil 10 wound between both of the rotor cores 8 and 9, fans 11 and 12 provided in the back of both of the rotor cores 8 and 9, a pulley 13 provided in the rotating shaft 7, and a slip ring 14 provided in the rotating shaft 7 for supplying a current to the field coil 10.

Numeral 15 is a brush for supplying a current to the slip ring 14, and numeral 16 is a brush holder for holding this brush 15, and numeral 17 is a commutator of three-phase full wave type for commutating alternating current output of the stator coil 5, and numeral 18 is a regulator for regulating a current of the field coil 10 to control an output voltage of the stator coil 5, and they are mounted in the rear bracket 2. The stator coil 5 wound and inserted into the stator core 4 comprises three-phase stator coils 5a, 5b and 5c as shown in Fig. 3, and respective one of lead conductors 19a, 19b and 19c of each the stator coil 5a, 5b and 5c extend toward the rear bracket 2 as shown in Fig. 2, and metal terminals 20 are bonded to the top ends of the lead conductors which are connected and fixed to a terminal 17a of the commutator 17. Also, Fig. 3 shows an example of a stator of star connection, and the others of the lead conductors of each the stator coil 5a, 5b and 5c are connected all together to form a neutral point 21.

In the alternating current generator for vehicle formed in this manner, the rotor cores 8 and 9 have magnetic pole pieces 8a and 9a which are opposite to the inner diameter portion of the stator core 4 through a predetermined air gap and are arranged so as to have engagement alternately and are magnetized in different magnetic poles alternately by the field coil 10. The field coil 10 is excited from a battery (not shown) through the brush 15 and the slip ring 14, and the rotor 6 is driven by an engine and thereby a rotating magnetic field occurs, and a three-phase alternating current power is generated in the stator coils 5a, 5b and 5c, and direct current is obtained by the commutator 17 to charge the battery, and a power is supplied to a load (not shown). A bond state between the metal terminals 20 and the lead conductors 19a, 19b, 19c of the stator coils 5a, 5b, 5c placed on this power supply path is shown in Fig. 1. An insulating film of the top end is removed in the lead conductor 19 and the lead conductor 19 is fixed by caulking with the lead conductor 19 embraced by bonding pieces 20a and 20b of the metal terminal 20 from both sides and moreover, in one end of portions where both of the bonding pieces 20a and 20b are opposite or overlap, spacing between the bonding pieces 20a and 20b is bonded and fixed by arc welding such as TIG welding and simultaneously a part of the lead conductor 19 is welded. The caulking pressure in this case is set so that a sectional area of the lead conductor 19 becomes 70 to 80% of the initial value, and this caulking pressure can be accurately set by controlling the ratio of caulking, namely a height from the bottom of the metal terminal 20 to the top of a swaged portion and a width of the swaged portion as shown in the height h and the width W of Fig. 1.

Fig. 4 is a characteristic graph illustrating the relationship between a decrease area residual rate showing a change in sectional area of the lead conductor 19 by a residual rate and tensile strength of a bonded portion of the lead conductor 19 and the metal terminal 20 to this ratio of caulking. Also, Fig. 5 is a characteristic graph illustrating the relationship between the decrease area residual rate and the tensile strength shown in Fig. 4. While bond strength increases with a decrease in the ratio of caulking, namely the height h from the bottom of the metal terminal 20 to the top of the swaged portion, the decrease area residual rate greatly decreases, with the result that stress caused by vibration concentrates on a change portion of the sectional area and fatigue fracture tends to:occur. As shown in Fig. 5, for the decrease area residual rate in the range of 70 to 80%, the tensile strength of the bonded portion does not change and is stable and also control is easy and a decrease rate in the sectional area is low, with the result that sufficient tensile strength and resistance to fatigue fracture can be obtained.

As described above, in the alternating current generator for vehicle of the first embodiment of the invention, bonding between the lead conductor 19 and the metal terminal 20 for connecting the stator coil 5 to the commutator 17 is first performed by caulking of the metal terminal 20 so that a residual rate of a sectional area of the lead conductor 19 becomes 70 to 80% of the initial value in the swaged portion and further, spacing between the bonding pieces 20a and 20b is welded and fixed at one end including a part of the lead conductor 19, so that the bonding having sufficient tensile strength without occurrence of fatigue fracture can be performed and also deterioration of this bond strength with time is suppressed by the welding fixation and electrical conductivity can be also stable to obtain the bonded portion with high reliability. Further, when oxygen free copper is used in the lead conductor 19 and/or the metal terminal 20, stable welding in which occurrence of blowholes caused by welding is suppressed can be obtained and also, since welding is performed in only one end of an opposite portion of the bonding pieces 20a and 20b, deterioration by welding heat of the bonded portion can also be reduced to a minimum.

### (Second Embodiment)

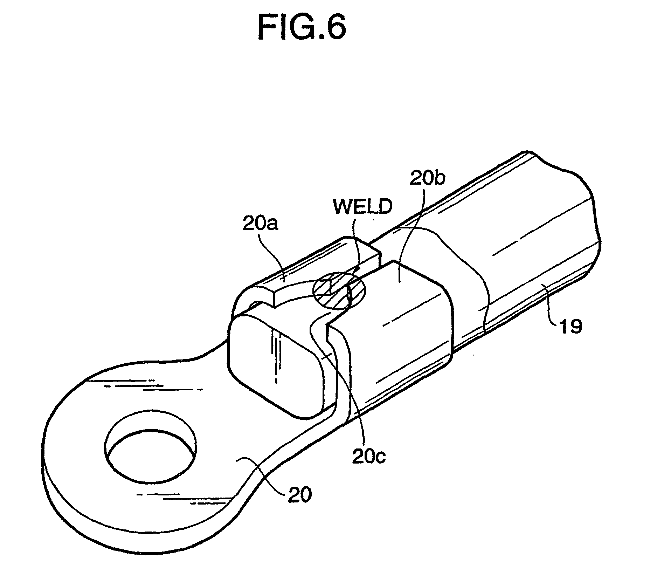

Fig. 6 is a perspective view showing terminal treatment of a lead conductor of a stator coil of an alternating current generator for vehicle of a second embodiment according to the invention. In this embodiment where a lead conductor 19 of a stator coil 5 is swaged and fixed by bonding pieces 20a and 20b of a metal terminal 20 and moreover spacing between the bonding pieces 20a and 20b is fixed by arc welding such as TIG welding, a notch portion 20c is provided in the tip side of the lead conductor 19 of the bonding pieces 20a and 20b so as to be formed in a U-shape in a caulking state, and the spacing between the bonding pieces 20a and 20b is welded and fixed in the vicinity of this U-shaped notch portion 20c and simultaneously a part of the lead conductor 19 is welded inside the U-shaped notch portion 20c.

During use of the generator, bending stress is repeatedly applied to the lead conductor 19 of the stator coil 5 due to vibration transmitted from an engine, and a portion to which the strongest bending stress is applied is the boundary where the lead conductor 19 is bonded and fixed to the metal terminal 20. In this embodiment, since the lead conductor 19 is held with the lead conductor 19 embraced by the bonding pieces 20a and 20b at the boundary where the lead conductor 19 is bonded to the metal terminal 20, stress due to vibration is likely to be displaced and absorbed and a portion where the lead conductor 19 is likely to harden by welding heat is the tip side of the lead conductor 19, so that resistance to vibration higher than that of the first embodiment can be obtained while obtaining strength and electrical conductivity similar to that of the first embodiment. Also, since a portion to which heat by welding is applied is only the tip end of the lead conductor 19, an insulating film of the lead conductor 19 does not deteriorate by heat and corrosion-resistant deterioration can be prevented and also, the U-shaped notch portion 20c acts as a molten pool of welding and electrical bonding between the metal terminal 20 and the lead conductor 19 is ensured more.

### (Third Embodiment)

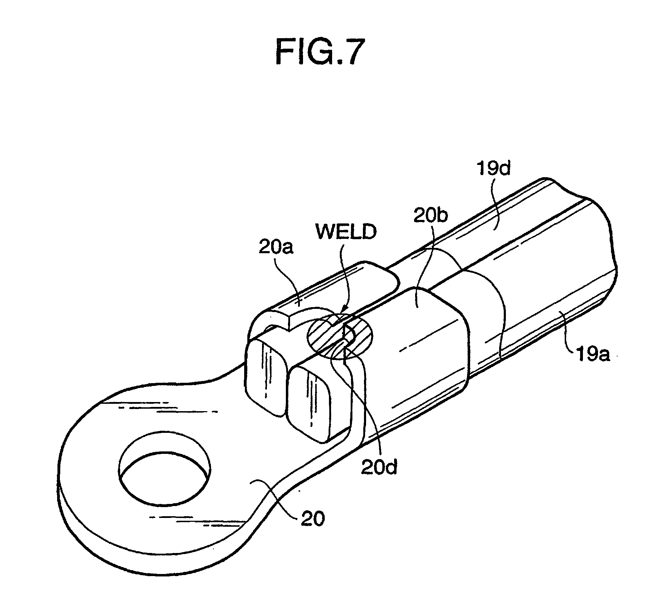

Fig. 7 is a perspective view showing terminal treatment of a lead conductor of a stator coil of an alternating current generator for vehicle of a third embodiment according to the invention. The case of a stator coil 5 with star connection is shown in the first and second embodiments, but in this embodiment, an example of delta connection is shown and two lead conductors 19a and 19d are connected to a metal terminal 20. In this connection, each of the lead conductors 19a and 19d are fixed by caulking so as to be embraced respectively by bonding pieces 20a and 20b of the metal terminal 20. A V-shaped notch portion 20d is provided in the bonding pieces 20a and 20b of the metal terminal 20 at the same place as the case of the second embodiment, and the metal terminal 20 is formed of a material (such as brass with relatively high hardness among copper group metals) with a hardness higher than that of the lead conductors .and also, spacing between the bonding pieces 20a and 20b is welded in the vicinity of this V-shaped notch portion 20d and simultaneously a part of both the lead conductors 19a and 19d is welded inside the V-shaped notch portion 20d, and solder coating is applied to a welded portion after welding.

In the case of connecting the two lead conductors 19a and 19d to the metal terminal 20 thus, stable strength and electrical conductivity can be obtained by controlling a decrease area residual rate in the range of 70 to 80% in a manner similar to the first embodiment described above. Also, by forming the metal terminal 20 of brass with a hardness higher than that of the lead conductors 19a and 19d and applying solder coating to the welded portion after welding, stable caulking strength, good electrical conductivity and high corrosion resistance can simultaneously be obtained and bonding with higher reliability can be performed. Particularly, in the case of connecting the two lead conductors 19a and 19d to the metal terminal 20 as described in this embodiment, each of the conductors 19a and 19d is individually swaged and fixed by the bonding pieces 20a and 20b, so that higher strength can be obtained.

Incidentally, in the above description, the example of delta connection is shown in this embodiment, but even for star connection, in the case of two winding for overlapping and winding two stator coils, two lead conductors are used and similar effect can be obtained by similar caulking fixation, and such a manner can be applied even to the case of three or more winding. Also, it goes without saying that similar effect can be obtained by the V-shaped notch portion 20d, the material of the metal terminal 20 and the solder coating after welding even in the case that the lead conductor 19 is single wire as the first and second embodiments described above. Further, by concurrently using the caulking fixation and welding according to the invention for connection of the neutral point 21 of the star connection shown in Fig. 3, high bond strength can be obtained.

According to an alternating current generator for vehicle of the invention as described above, bonding between a lead conductor and a metal terminal for connecting a stator coil to a commutator is performed by caulking while controlling a height and a width so that a sectional area of the lead conductor becomes 70 to 80% of the initial value in a swaged portion and a part of this swaged portion and a part of the lead conductor are fixed by welding, and also a U-shaped or V-shaped notch portion is provided in the tip side of the lead conductor of the swaged portion and in the vicinity of the notch portion and inside the notch portion, a part of the swaged portion and a part of the lead conductor are fixed by welding, and further oxygen free copper is used in the lead conductor and/or the metal terminal or a material with a hardness higher than that of the lead conductor is used in the metal terminal or the solder coating is applied to a welded portion, with the result that the alternating current generator for vehicle in which the bonding without occurrence of fatigue fracture in a stable state of tensile strength can be performed and there is no deterioration of this bond strength or electrical conductivity with time and a bonded portion with good resistance to corrosion and vibration and high reliability is included can be obtained.

## Claims

1. A method for making a connection of an alternator coil lead conductor in an alternating current generator for a vehicle, the alternating current generator including
a stator (3) including a stator core (4) and a polyphase stator coil (5) having a lead conductor (19) wound and inserted into said stator core,
a rotor (6) in which rotor cores (8, 9) for forming magnetic poles are fixed in a rotating shaft (7),
a front bracket (1) and a rear bracket (2) for holding said stator and rotatably supporting said rotor, and
a commutator (17) which is mounted in said rear bracket and to which a metal terminal (20) having bonding pieces (20a, 20b) and being bonded to said lead conductor of said stator coil is connected,
the method comprising the steps of
embracing the end of said lead conductor from both sides thereof by said bonding pieces,
bonding said lead conductor and said metal terminal by caulking said bonding pieces (20a, 20b) of said metal terminal, such that a spacing between said bonding pieces is formed, and
fixing said bonding pieces to said lead conductor by arc welding said spacing.

2. The method as defined in claim 1, wherein the step of
fixing by welding of the spacing between said bonding pieces is performed in a part of the longitudinal direction of the spacing between said bonding pieces.

3. The method as defined in claim 1 or 2, wherein the step of
fixing by welding of the spacing between said bonding pieces includes welding a part of said lead conductor.

4. The method as defined in any one of claims 1 to 3, wherein
the caulked bonding pieces form a notch in the tip side of said bonding pieces, and the step of fixing includes
welding the spacing between said bonding pieces in the vicinity of the notch.

5. The method as defined in any one of claims 1 to 4, further comprising the step of
applying a pressure at the time of caulking which is set such that the sectional area of said lead conductor, after fixation by caulking, is 70 to 80 % of the initial sectional area of said lead conductor.

6. The method as defined in any one of claims 1 to 5, further including the step of applying a solder coating to a bonded portion of said bonding pieces.

7. An alternating current generator for a vehicle, comprising:
a stator (3) including a stator core (4) and a polyphase stator coil (5) having a lead conductor (19) wound and inserted into said stator core,
a rotor (6) in which rotor cores (8, 9) for forming magnetic poles are fixed in a rotating shaft (7),
a front bracket (1) and a rear bracket (2) for holding said stator and rotatably supporting said rotor, and
a commutator (17) which is mounted in said rear bracket and to which a metal terminal (20) having bonding pieces (20a, 20b) and being bonded to said lead conductor of said stator coil is connected,
wherein said lead conductor and said metal terminal are bonded by embracing said lead conductor from both sides thereof by said bonding pieces and caulking said bonding pieces of said metal terminal such that a spacing between said bonding pieces is formed, and said bonding pieces are fixed to said lead conductor by arc welding said spacing.

8. The alternating current generator as defined in claim 7, wherein a portion of the longitudinal direction of the spacing between said bonding pieces is fixed by welding.

9. The alternating current generator as defined in claim 7 or 8, wherein part of said lead conductor is welded to said bonding pieces.

10. The alternating current generator as defined in any one of claims 7 to 9, wherein the caulked bonding pieces comprise a notch on the top side thereof, and the bonding pieces are welded in the vicinity of the notch.

11. The alternating current generator as defined in any one of claims 7 to 10, wherein the sectional area of said lead conductor, after caulking, is 70-80% of the initial sectional area of said lead conductor.

12. The alternating current generator as defined in claims 7 to 11, wherein at least one of said lead conductor and said metal terminal are made of oxygen-free copper.

13. The alternating current generator for vehicle as defined in any one of claims 7 to 12, wherein
said metal terminal is formed of a material with a hardness higher than a hardness of said lead conductor.

14. The alternating current generator for vehicle as defined in one of claims 7 to 13, wherein
said lead conductor, swaged and fixed by said bonding pieces of said metal terminal, includes a plurality of lead conductors.

## Patentansprüche

1. Verfahren zum Herstellen einer Verbindung eines Spulenleiters in einem Wechselstromgenerator für ein Kraftfahrzeug, wobei der Wechselstromgenerator umfasst:
einen Stator (3), der einen Statorkern (4) und eine mehrphasige Statorspule (5) mit einem um den Statorkern gewickelten und in diesen eingeführten Leiter (19) umfasst,
einen Rotor (6), in dem Rotorkerne (8, 9) zum Bilden von magnetischen Polen in einer Welle (7) befestigt sind,
einer vorderen Halterung (1) und einer hinteren Halterung (2) zum Halten des Stators und zum drehbaren Lagern des Rotors, und
einen Gleichrichter (7), der in der hinteren Halterung befestigt ist und der mit einem Metallanschluss (20) verbunden ist, der Verbindungsteile (20a, 20b) besitzt, die mit dem Leiter der Statorspule verbunden sind, wobei das Verfahren die Schritte aufweist:
Umschließen des Endes des Leiters von beiden Seiten desselben durch die Verbindungsteile,
Verbinden des Leiters und des Metallanschlusses durch Verstemmen der Verbindungsteile (20a, 20b) des Metallanschlusses derart, dass ein Abstand zwischen den Verbindungsteilen gebildet ist, und
Befestigen der Verbindungsteile an den Leiter durch Lichtbogenschweißen des Abstandes.

2. Verfahren nach Anspruch 1, wobei der Schritt des Befestigens durch Schweißen des Abstandes zwischen den Verbindungsteilen in einem Bereich der Längsrichtung des Abstandes zwischen den Verbindungsteilen durchgeführt wird.

3. Verfahren nach Anspruch 1 oder 2, wobei der Schritt des Befestigens durch Schweißen des Abstandes zwischen den Verbindungsteilen das Schweißen eines Teils des Leiters umfasst.

4. Verfahren nach einem der Ansprüche 1 bis 3, wobei die verstemmten Verbindungsteile eine Kerbe an der oberen Seite der Verbindungsteile bilden, und wobei der Schritt des Befestigens das Schweißen des Abstandes zwischen den Verbindungsteilen in der Nähe der Kerbe umfasst.

5. Verfahren nach einem der Ansprüche 1 bis 4, des weiteren mit dem Schritt:
Anwenden von Druck zum Zeitpunkt des Verstemmens, der derart eingestellt ist, dass die Querschnittsfläche des Leiters, nach dem Befestigen durch das Verstemmen, 70 bis 80% der ursprünglichen Querschnittsfläche des Leiters beträgt.

6. Verfahren nach einem der Ansprüche 1 bis 5, des weiteren mit dem Schritt: Auftragen einer Lötbeschichtung auf einen verbundenen Abschnitt der Verbindungsteile.

7. Ein Wechselstromgenerator für ein Kraftfahrzeug, umfassend:
einen Stator (3), der einen Statorkern (4) und eine mehrphasige Statorspule (5) mit einem um den Statorkern gewickelten und in diesen eingeführten Leiter (19) umfasst,
einen Rotor (6), in dem Rotorkerne (8, 9) zum Bilden von magnetischen Polen in einer Welle (7) befestigt sind,
einen vorderen Halter (1) und einen hinteren Halter (2) zum Halten des Stators und zum drehbaren Lagern des Rotors, und
einen Gleichrichter (17), der in dem hinteren Halter befestigt ist und der mit einem Metallanschluss (20) verbunden ist, der Verbindungsteile (20a, 20b) besitzt, die mit dem Leiter der Statorspule verbunden sind,
wobei der Leiter und der Metallanschluss verbunden sind durch Umschließen des Leiters von beiden Seiten desselben durch die Verbindungsteile und Verstemmen der Verbindungsteile des Metallanschlusses derart, dass ein Abstand zwischen den Verbindungsteilen gebildet wird, und wobei die Verbindungsteile mit dem Leiter durch Lichtbogenschweißen des Abstandes befestigt sind.

8. Der Wechselstromgenerator nach Anspruch 7, wobei ein Abschnitt der Längsrichtung des Abstandes zwischen den Verbindungsteilen durch Schweißen befestigt ist.

9. Der Wechselstromgenerator nach Anspruch 7 oder 8, wobei ein Teil des Leiters mit den Verbindungsteilen verschweißt ist.

10. Wechselstromgenerator nach einem der Ansprüche 7 bis 9, wobei die verstemmten Verbindungsteile eine Kerbe an der Oberseite derselben aufweisen, und wobei die Verbindungsteile in der Nähe der Kerbe verschweißt sind.

11. Wechselstromgenerator nach einem der Ansprüche 7 bis 10, wobei die Querschnittsfläche des Leiters nach dem Verstemmen 70 bis 80% der ursprünglichen Querschnittsfläche des Leiters beträgt.

12. Wechselstromgenerator nach einem der Ansprüche 7 bis 11, wobei der Leiter und/oder der Metallanschluss aus Sauerstofffreiem Kupfer hergestellt sind/ist.

13. Wechselstromgenerator für ein Kraftfahrzeug nach einem der Ansprüche 7 bis 12, wobei der Metallanschluss aus einem Material mit einer Härte, die höher als die Härte des Leiters ist, gebildet ist.

14. Wechselstromgenerator für ein Kraftfahrzeug nach einem der Ansprüche 7 bis 13, wobei der Leiter, der durch die Verbindungsteile des Metallanschlusses gesenkgedrückt und befestigt ist, eine Mehrzahl von Leitern umfasst.

## Revendications

1. Procédé pour réaliser une connexion d'un fil conducteur de bobine d'alternateur d'un générateur de courant alternatif pour un véhicule, le générateur de courant alternatif comprenant
un stator (3) comprenant un noyau de stator (4) et une bobine de stator polyphasée (5) ayant un fil conducteur (19) enroulé et inséré dans ledit noyau de stator,
un rotor (6) dans lequel des noyaux de rotor (8, 9) pour former des pôles magnétiques sont fixés dans un arbre rotatif (7),
une fixation avant (1) et une fixation arrière (2) pour maintenir ledit stator et soutenir de manière rotative ledit rotor, et
un commutateur (17) qui est monté dans ladite fixation arrière et auquel une borne métallique (20) ayant des pièces de liaison (20a, 20b) et étant reliée audit fil conducteur de ladite bobine de stator est connectée,
le procédé comprenant les étapes consistant à
entourer l'extrémité dudit fil conducteur des deux côtés de celui-ci par lesdites pièces de liaison,
lier ledit fil conducteur et ladite borne métallique en matant lesdites pièces de liaison (20a, 20b) de ladite borne métallique, de sorte qu'un espacement entre lesdites pièces de liaison soit formé, et
fixer lesdites pièces de liaison audit fil conducteur en soudant à l'arc ledit espacement.

2. Procédé selon la revendication 1, dans lequel l'étape consistant à fixer par soudure de l'espacement entre lesdites pièces de liaison est exécutée dans une partie de la direction longitudinale de l'espacement entre lesdites pièces de liaison.

3. Procédé selon la revendication 1 ou 2, dans lequel l'étape consistant à
fixer par soudure de l'espacement entre lesdites pièces de liaison comprend la soudure d'une partie dudit fil conducteur.

4. Procédé selon l'une quelconque des revendications 1 à 3, dans lequel
les pièces de liaison matées forment une encoche dans le côté pointe desdites pièces de liaison, et l'étape de fixation comprend
la soudure de l'espacement entre lesdites pièces de liaison au voisinage de l'encoche.

5. Procédé selon l'une quelconque des revendications 1 à 4, comprenant en outre l'étape consistant à
appliquer une pression au moment du matage qui est définie de sorte que la superficie de section dudit fil conducteur, après fixation par matage, est de 70 à 80 % de la superficie de section initiale dudit fil conducteur.

6. Procédé selon l'une des revendications 1 à 5, comprenant en outre l'étape consistant à appliquer un revêtement de brasage sur une portion liée desdites pièces de liaison.

7. Générateur de courant alternatif pour un véhicule, comprenant :
un stator (3) comprenant un noyau de stator (4) et une bobine de stator polyphasée (5) ayant un fil conducteur (19) enroulé et inséré dans ledit noyau de stator,
un rotor (6) dans lequel des noyaux de rotor (8, 9) pour former des pôles magnétiques sont fixés dans un arbre rotatif (7),
une fixation avant (1) et une fixation arrière (2) pour maintenir ledit stator et soutenir de manière rotative ledit rotor, et
un commutateur (17) qui est monté dans ladite fixation arrière et auquel une borne métallique (20) ayant des pièces de liaison (20a, 20b) et étant relié audit fil conducteur de ladite bobine de stator est connectée,
dans lequel ledit fil conducteur et ladite borne métallique sont reliés en entourant ledit fil conducteur des deux côtés de celui-ci par lesdites pièces de liaison et en matant lesdites pièces de liaison de ladite borne métallique de sorte qu'un espacement entre lesdites pièces de liaison soit formé, et lesdites pièces de liaison sont fixées audit fil conducteur en soudant à l'arc ledit espacement.

8. Ledit générateur de courant alternatif selon la revendication 7, dans lequel une partie de la direction longitudinale de l'espacement entre lesdites pièces de liaison est fixée par soudure.

9. Générateur de courant alternatif selon la revendication 7 ou 8, dans lequel une partie dudit fil conducteur est soudée aux dites pièces de liaison.

10. Générateur de courant alternatif selon l'une quelconque des revendications 7 à 9, dans lequel les pièces de liaison matées comprennent une encoche sur le côté supérieur de celles-ci, et les pièces de liaison sont soudées au voisinage de l'encoche.

11. Générateur de courant alternatif selon l'une quelconque des revendications 7 à 10, dans lequel la superficie de section dudit fil conducteur, après matage, est de 70 à 80 % de la superficie de section dudit fil conducteur.

12. Générateur de courant alternatif selon les revendications 7 à 11, dans lequel au moins un dudit fil conducteur et de ladite borne métallique sont faits de cuivre exempt d'oxygène.

13. Générateur de courant alternatif pour véhicule selon l'une quelconque des revendications 7 à 12, dans lequel
ladite borne métallique est formée d'un matériau avec une dureté supérieure à la dureté dudit fil conducteur.

14. Générateur de courant alternatif pour véhicule selon l'une quelconque des revendications 7 à 13, dans lequel
ledit fil conducteur, estampé et fixé par lesdites pièces de liaison de ladite borne métallique, comprend une pluralité de fils conducteurs.
